# EUROPEAN PATENT SPECIFICATION

(11) **EP 1 182 953 B1**
(45) Date of publication and mention of the grant of the patent: **20.12.2006**
(21) Application number: 00935335.0
(22) Date of filing: 25.05.2000
(51) Int. Cl.: A47J 37/12, A47J 27/21

(54) **ELECTRICALLY HEATED LIQUID CONTAINER**
ELEKTRISCH BEHEIZTER FLÜSSIGKEITSBEHÄLTER
CONTENEURS DE LIQUIDES CHAUFFES PAR RESISTANCE

(30) Priority: 25.05.1999 GB 9912186
(43) Date of publication of application: 06.03.2002
(73) Proprietor: OTTER CONTROLS LIMITED, Buxton, Derbyshire SK17 6LA (GB)
(72) Inventor: O'NEILL, Robert, Andrew, Buxton, Derbyshire SK17 9NQ (GB); HADFIELD, Robert, Henry, Marple, Cheshire SK6 6DF (GB)
(74) Representative: Milhench, Howard Leslie
(86) International application number: PCT/GB2000/002010
(87) International publication number: WO 2000/071011

(56) References cited:
- EP-A- 0 254 482
- EP-A- 0 587 300
- GB-A- 2 202 376
- GB-A- 2 325 396

## Description

### Field of the Invention:

This invention concerns improvements relating to electrically heated liquid containers, particularly where the intended liquid is not water and more particularly, though not exclusively, deep fat fryers.

### Background of the Invention:

Deep fat fryers are known, for example from EP-A-0587300, in which the heating element of the fryer is attached to or embedded into the base of a fat container of the fryer which is removable, for ease of cleaning, from the body of the fryer. The heating element is commonly of metal sheathed, mineral insulated, resistance wire type and the ends of the sheath where the heating element cold leads emerge are sealed so as to be water tight to enable the container and associated heating element to be totally immersed for cleaning or to be cleaned in a dishwasher. The heating element cold leads, also known in the art as cold terminations or cold tails, have contacts for making direct engagement with complementary connectors of a cordless socket connector which is mounted in the body of the fryer so that when the fat container is properly inserted into the fryer body the heating element can be powered via the socket connector.

Given the hostile operating environment of such deep fat fryers from an electrical safety standpoint, where spillage of hot oil or fat during operation or of water when the fryer is wiped over after use may occur, the cordless socket connector has conventionally been designed to exhibit large electrical creepage distances and to be very tolerant of the inevitably wide dimensional variations that occur in manufacture of sheathed heating elements and in their attachment to liquid containers. The socket has to be safe to avoid the possibility of liquid or human body parts reaching electrically live conductors, and has to ensure the safe connection of the earth (ground) connectors first under all tolerance conditions. These problems have dictated the use of physically large socket connectors, specially designed for use in deep fat fryers, despite the fact that cordless electrical connector sets for water heating vessels, such as kettles and hot water jugs, are commonly available which have a proven reliability and electrical safety reputation.

According to the present invention, there is provided a liquid heating appliance according to claim 1.

The heating element terminal portions and the cooperating terminal portions provided on the body part and configured for engagement therewith can, as is conventional, be formed to define wide electrical spacings with generous allowance for manufacturing tolerances. Furthermore, by provision of an interlock in the appliance body such as to ensure that the liquid container can be removed and replaced only when said connector mechanism is in its OFF condition in which the appliance terminal portions cooperating with the heating element terminal portions are disconnected from the electrical supply, the mating heating element cold tails and earth connection may engage the cooperating appliance terminals and disengage therefrom in any order, which further enhances the possibility of providing generous tolerances and simplifying the respective terminal configurations. The terminal portions on the appliance which cooperate with the heating element terminals could be simple spring contacts, and the interlock could include or consist of the provision of a shutter arrangement cooperating with the connector mechanism and preventing cooperation between the heating element terminal portion and the terminal portions of the appliance body except when the connector mechanism is in its ON condition. Such shutter mechanism could advantageously be arranged to protect the heating element terminals and the cooperating appliance terminal portions against spillages during operation of the appliance when the connector mechanism would be in its ON position.

The connector mechanism could for example comprise a cordless connector of a kind utilized with cordless electrical kettles and hot water jugs, for example our CS2 cordless electrical connector which is substantially as described in GB-A-2241390, mounted to a slidable carrier enabling the connector to be moved manually between ON and OFF positions, the ON position putting the connector into operative engagement with the further terminal portions provided in the appliance body and providing for powering of the heating element and the OFF condition disconnecting such engagement. The shutter aforementioned could be mounted to or form part of the sliding carrier, or could be arranged to be operated by movement of the sliding carrier. Using such a kettle or jug connector, the further electrical terminal portions in the appliance could be configured as the three small pins in a triangular layout of the conventional IEC 10 Amp connector.

The invention, in an exemplary embodiment, thus contemplates a deep fat fryer having a removable fat container with a heating element having conventional widely spaced terminals adapted to mate with simple, widely spaced spring terminals in the appliance body. These spring terminals might be provided on one side of an intermediate (adaptor) component having IEC 10 Amp connector terminals for example on another side, and a cordless kettle connector, such as the abovementioned CS2 connector for example, might be mounted to a slidable carrier so as, in a forward position of the carrier, to mate with these further terminals and, in a rearward position of the carrier, to be disengaged therefrom. Also mounted to the carrier or moved by it might be a sliding shutter which, when withdrawn, exposes the spring terminals provided on one side of the adaptor to allow the fat container to be placed in or removed from its working position and to allow them to make contact with the heating element. As the sliding carrier is moved forwardly, so the CS2 connector will come into contact with the adaptor terminals and the shutter will also move forward. If there is no container present, the shutter then prevents unsafe access to the adapter terminals and, if the container is present, the shutter can locate above the heating element cold tails thus serving as an interlock preventing the container from being removed whilst energised. A formation on the container could engage with the shutter to perform this interlocking if preferred.

In use of such an embodiment, the fat container is placed into the appliance body with the connector and slidable carrier in their rearward positions, and the user then presses in a start mechanism which slides the connector forwards into contact with the adaptor and causes the heating element to be energised. A thermostat may conveniently be carried by the sliding carrier to be brought into good thermal contact with the side or base of the container when the carrier is in its forward position. After use, the start mechanism may be released, thereby disconnecting the connector and also allowing the removal of the container for cleaning.

The invention is advantageous not only in that it enables the use of a well proven connector, but also that it enables thick film heating elements to be used on the containers of deep fat fryers. Such heating elements do not have cold tails projecting therefrom for engagement into recesses in a special connector, but can readily be contacted with the spring terminals of an adaptor as described hereinabove.

The above and further features of the invention are set forth in the pended claims, and will be described in the following by reference to the accompanying drawings.

### Description of the Drawings:

Figure 1 is a schematic side elevation view of an exemplary embodiment of the present invention; and
Figure 2 is a schematic plan view of the embodiment illustrated in Figure 1.

### Detailed Description of the Embodiment:

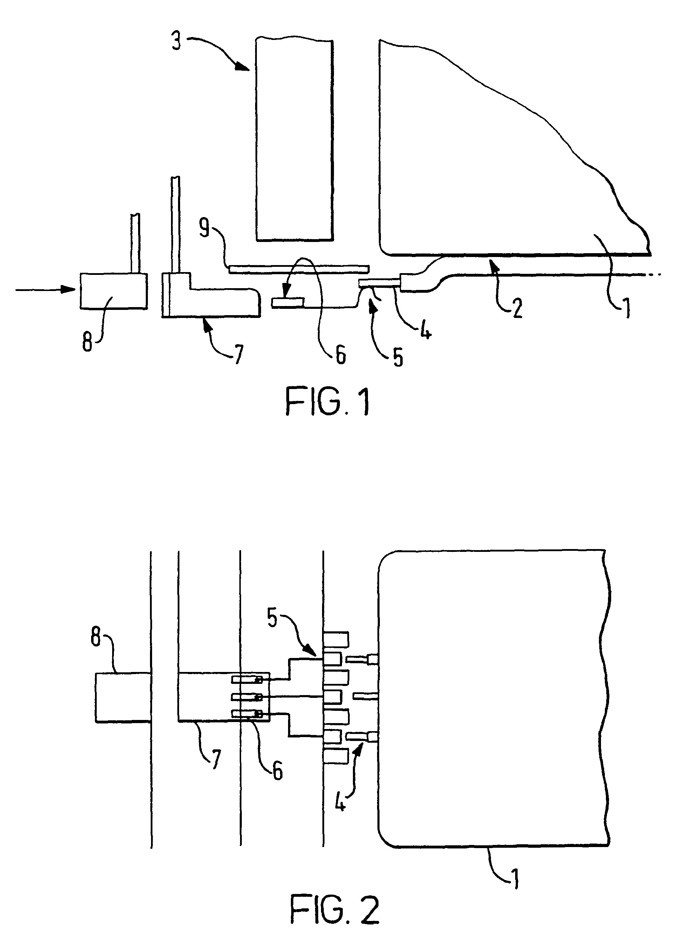

Referring to Figure 1, shown schematically is the liquid container 1 of a deep fat fryer having a sheathed heating element 2 affixed to the underside of the base thereof by any convenient means. The container 1 is adapted to be received in an accommodating recess in a body part 3 of the fryer and, when so received, terminals 4 of the heating element 2 are engaged by respective spring contacts 5 fixed in the body part 3 of the fryer. The spring contacts 5 are formed at their other ends with pin terminals 6 which are configured for engagement with a CS2 cordless connector 7 as described in GB-A-2241390, aforementioned. The connector 7 is mounted on a sliding carrier (not shown) so as to be movable into and out of operative engagement with the pin terminals 6, a push-button arrangement 8 being provided in the body part 3 of the fryer to enable the position of the connector 7 to be determined manually. Also mounted to the sliding carrier, or movable with it, is a sliding shutter 9 which, when withdrawn in the retracted or OFF position of the connector 7. exposes the spring contacts 5 so as to permit the container 1 to be introduced into the body part 3 of the fryer and the heating element terminals 4 to engage the spring contacts 5. When the sliding shutter 9 is moved to its forward position, corresponding to the ON position of the connector 7 when it engages the pin terminals 6, the shutter 9 moves over the engaged contacts 5 and heating element terminals 4 so as to protect them against spillage of liquid from the container 1 in use and also engages mechanically with the container 1 so as to prevent it from being removed from the fryer while the connector 7 is in its ON position and supplying power to the heating element Similarly, if the connector 7 is moved to its ON position when the container 1 is not in place, the shutter 9 will prevent unsafe access to the spring contacts 5.

The schematic plan view of Figure 2 illustrates the wide spacing of the heating element terminals 4 and the cooperating spring contacts 5, and the relatively narrow spacing of the pin terminals 6 which cooperate with the CS2 connector 7. These connector parts can conveniently be provided in a moulded plastics adaptor component fixed in the fryer body 3.

In use, the fat container 1 is placed into the body unit 3, the user then presses in the start mechanism 8 which slides the CS2 forward into contact with the adapter, energising the heating element, usually under the control of a thermostat, which may also conveniently be carried by the slider to be brought into engagement with the container side or base in a conventional manner. After use the start mechanism is released, disconnecting the CS2, and allowing the removal of the container for cleaning.

The principal advantage of this arrangement is that it allows the use of the proven connector, which is resistant to the normal spillages of everyday use, and provides the correct connection sequence (earth first etc.) in a controllable way, since the only part of the adaptor which requires close tolerance is the area which guides and makes contact with the CS2. There is a further significant advantage, however, in that a connection method of this type allows the use of thick film printed elements on the fat containers of deep fat fryers. Such elements do not have projecting cold tails which can locate into the recesses normally provided in the bottom of the body part. With the proposed arrangement the metal connecting parts of the adaptor may project above the surface to make contact with contact pads on the element since they are normally isolated from the supply. As the shutter is advanced (as the CS2 is brought into contact with the adaptor) it will cover these exposed metal parts and could lower them below the surface of the adaptor if the fat container and element is not present. As with the sheathed element arrangement, if the container is present then the shutter will engage to interlock with it To achieve this, the contacts might be provided on a part of the element plate which projects from the side of the container body.

The invention having been described in the foregoing by reference to a specific embodiment, it is to be appreciated that the described embodiment is in all respect exemplary and that modifications and variations thereto are possible without departure from the scope of the invention.

## Claims

1. A liquid heating appliance comprising a body part (3) housing a liquid container (1) which is removable from the body part (3), an electric heating element (2) associated with said container (1) so as to be removable therewith from the body part (3), said electric heating element (2) having terminal portions (4) and the body part of the appliance having cooperating terminal portions (5) for engaging the heating element terminal portions (4) when the container (1) is operatively assembled with the appliance body part (3), said cooperating terminal portions (5) being electrically connected to yet further terminal portions (6) provided in the appliance body part (3), and a connector mechanism (7) being provided in the appliance body part (3) for making and breaking electrical connection to said further electrical terminals (6), **characterized by** an interlock (9) arranged such that the liquid container (1) can be removed from and replaced in the appliance body part (3) only when said connector mechanism (7) does not make said electrical connection.

2. An appliance as claimed in claim 1 wherein said connector mechanism (7) comprises a connector (7) adapted for engagement with said further electrical terminals (6) and arranged to be movable between engaging and disengaged positions respectively for making and breaking said electrical connection.

3. An appliance as claimed in claim 2 wherein said connector (7) is mounted on a movable carrier so as to move between said engaging and disengaging positions.

4. An appliance as claimed in claim 2 or 3 wherein said further electrical terminals (6) are configured as the terminals of an IEC 10 Amp connector and the connector (7) is adapted for engagement therewith.

5. An appliance as claimed in any preceding claim, wherein said interlock (9) comprises a movable shutter (9) for said cooperating terminal portions (5).

6. An appliance as claimed in any preceding claim, wherein said heating element (2) is a thick film heating element.

7. An appliance as claimed in claim 6 as dependent upon claim 5 wherein said cooperating terminal portions (5) comprise spring terminals for contacting terminal pads of said thick film heating element (2), and said movable shutter (9) is arranged to inhibit access to said spring terminals when the container (1) is not in the appliance body part (3).

## Patentansprüche

1. Flüssigkeitsheizgerät, umfassend einen Gehäuseteil (3), der einen Flüssigkeitsbehälter (1) aufnimmt, der aus dem Gehäuseteil (3) entfernt werden kann, ein elektrisches Heizelement (2), das dem Behälter (1) zugeordnet ist, so dass es mit demselben aus dem Gehäuseteil (3) entfernt werden kann, wobei das elektrische Heizelement (2) Anschlussabschnitte (4) hat und der Gehäuseteil des Geräts zusammenwirkende Anschlussabschnitte (5) hat, um die Heizelement-Anschlussabschnitte (4) in Eingriff zu nehmen, wenn der Behälter (1) betriebsbereit mit dem Gerätegehäuseteil (3) zusammengebaut ist, wobei die zusammenwirkenden Anschlussabschnitte (5) elektrisch verbunden sind mit noch weiteren Anschlussabschnitten (6), die in dem Gerätegehäuseteil (3) bereitgestellt werden, und einen Verbindermechanismus (7), der in dem Gerätegehäuseteil (3) bereitgestellt wird, um die elektrische Verbindung zu den weiteren Anschlüssen (6) herzustellen und zu unterbrechen, **gekennzeichnet durch** eine Verriegelung (9), die derart angeordnet ist, dass der Flüssigkeitsbehälter (1) nur aus dem Gerätegehäuseteil (3) entfernt und wieder darin angebracht werden kann, wenn der Verbindermechanismus (7) die elektrische Verbindung nicht herstellt.

2. Gerät nach Anspruch 1, wobei der Verbindermechanismus (7) einen Verbinder (7) umfasst, eingerichtet zum Eingriff mit den weiteren elektrischen Anschlüssen (6) und angeordnet, um zwischen einer eingreifenden und einer ausgerückten Position beweglich zu sein, um die elektrische Verbindung herzustellen bzw. zu unterbrechen.

3. Gerät nach Anspruch 2, wobei der Verbinder (7) an einem beweglichen Träger angebracht ist, um sich so zwischen der eingreifenden und der ausrückenden Position zu bewegen.

4. Gerät nach Anspruch 2 oder 3, wobei die weiteren elektrischen Anschlüsse (6) als die Anschlüsse eines IEC-Verbinders von 10 Ampere konfiguriert sind und der Verbinder (7) für einen Eingriff mit denselben eingerichtet ist.

5. Gerät nach einem der vorhergehenden Ansprüche, wobei die Verriegelung (9) einen beweglichen Verschluss (9) für die zusammenwirkenden Anschlussabschnitte (5) umfasst.

6. Gerät nach einem der vorhergehenden Ansprüche, wobei das Heizelement (2) ein Dickschicht-Heizelement ist.

7. Gerät nach Anspruch 6, wenn abhängig von Anspruch 5, wobei die zusammenwirkenden Anschlussabschnitte (5) Federanschlüsse zum Berühren von Anschlussaugen des Dickschicht-Heizelements (2) umfassen und der bewegliche Verschluss (9) dafür eingerichtet ist, den Zugang zu den Federanschlüssen zu hemmen, wenn sich der Behälter (1) nicht in dem Gerätegehäuseteil (3) befindet.

## Revendications

1. Appareil de chauffage de liquide comprenant une partie corps (3) renfermant un conteneur de liquide (1) qui peut être retiré de la partie corps (3), un élément de chauffage électrique (2) associé au dit conteneur (1) de manière à pouvoir être retiré avec celui-ci de la partie corps (3), ledit élément de chauffage électrique (2) comportant des parties bornes (4) et la partie corps de l'appareil comportant des parties bornes coopérantes (5) entrant en contact avec les parties bornes (4) de l'élément de chauffage lorsque le conteneur (1) est assemblé fonctionnellement à la partie corps (3) de l'appareil, lesdites parties bornes coopérantes (5) étant connectées électriquement à d'autres parties bornes (6) disposées dans la partie corps (3) de l'appareil, et un mécanisme de connecteur (7) étant disposé dans la partie corps (3) de l'appareil afin d'effectuer et d'interrompre la connexion électrique vers lesdites autres bornes électriques (6), **caractérisé par** un verrouillage (9) disposé de sorte que le conteneur de liquide (1) peut être retiré de la partie corps (3) de l'appareil et replacé dans celle-ci uniquement lorsque ledit mécanisme de connecteur (7) n'effectue pas ladite connexion électrique.

2. Appareil tel que revendiqué dans la revendication 1, dans lequel ledit mécanisme de connecteur (7) comprend un connecteur (7) conçu pour entrer en contact avec lesdites autres bornes électriques (6) et disposé de manière à pouvoir passer en une position d'enclenchement et une position de désenclenchement, respectivement, afin d'effectuer et d'interrompre ladite connexion électrique.

3. Appareil tel que revendiqué dans la revendication 2, dans lequel ledit connecteur (7) est monté sur un support mobile de manière à pouvoir se déplacer entre lesdites positions d'enclenchement et de désenclenchement.

4. Appareil tel que revendiqué dans la revendication 2 ou 3. dans lequel lesdites autres bornes électriques (6) sont configurées à la manière des bornes d'un connecteur IEC de 10 ampères, et le connecteur (7) est conçu pour entrer en contact avec celles-ci.

5. Appareil tel que revendiqué dans l'une quelconque des revendications précédentes, dans lequel ledit verrouillage (9) comprend un volet mobile (9) pour lesdites parties bornes coopérantes (5).

6. Appareil tel que revendiqué dans l'une quelconque des revendications précédentes, dans lequel ledit élément de chauffage (2) consiste en un élément de chauffage de type film épais.

7. Appareil tel que revendiqué dans la revendication 6 lorsqu'elle dépend de la revendication 5, dans lequel lesdites parties de bornes coopérantes (5) comprennent des bornes à ressort entrant en contact avec les plaquettes des bornes dudit élément de chauffage de type film épais (2), et ledit volet mobile (9) est disposé de manière à empêcher tout accès aux bornes à ressort lorsque le conteneur (1) n'est pas dans la partie corps (3) de l'appareil.
